# EUROPEAN PATENT SPECIFICATION

(11) **EP 4 085 257 B1**
(45) Date of publication and mention of the grant of the patent: **10.07.2024**
(21) Application number: 20851296.2
(22) Date of filing: 29.12.2020
(51) Int. Cl.: G01N 35/00, G06N 3/12, G06F 17/00

(54) **SYSTEMS AND METHODS FOR IMPROVED AUTOMATION OF LABORATORY PROCESSES**
SYSTEME UND VERFAHREN ZUR VERBESSERTEN AUTOMATISIERUNG VON LABORPROZESSEN
SYSTÈMES ET PROCÉDÉS POUR L'AUTOMATISATION AMÉLIORÉE DES TRAITEMENTS DE LABORATOIRE

(30) Priority: 31.12.2019 GB 201919469
(43) Date of publication of application: 09.11.2022
(73) Proprietor: Synthace Limited, London W12 7FQ (GB)
(72) Inventor: GERSHATER, Markus, London W12 7FQ (GB); SANCHANIA, Vishal, London W12 7FQ (GB); LEITÃO, José Nuno De Araújo, London W12 7FQ (GB); GRANT, Christopher Richard, London W12 7FQ (GB); BROWN, Steven Richard, London W12 7FQ (GB); SADOWSKI, Michael Ian, London W12 7FQ (GB)
(74) Representative: Keltie LLP
(86) International application number: PCT/GB2020/053374
(87) International publication number: WO 2021/136932

(56) References cited:
- EP-A1- 1 473 086
- EP-A2- 1 191 312
- US-A1- 2006 202 922
- US-A1- 2017 016 079
- WIELING J ET AL: "Integration of robotics and chemometrics for the automated optimisation of drug extractions", CHEMOMETRICS AND INTELLIGENT LABORATORY SYSTEMS, ELSEVIER SCIENCE PUBLISHERS B.V. AMSTERDAM, NL, vol. 25, no. 2, 1 November 1994 (1994-11-01), pages 355 - 366, XP026486562, ISSN: 0169-7439, [retrieved on 19941101], DOI: 10.1016/0169-7439(94)85053-4

## Description

### FIELD

The invention is in the field of laboratory automation including systems and methods that incorporate or control liquid handling robotics.

### BACKGROUND OF THE INVENTION

Reproducibility of results and associated data in science is a key concern in assessing the credibility of a reported advance. As reported by Nature, a study involving 1576 researchers stated that '*more than 70% of researchers [involved in the surveyj have tried and failed to reproduce another scientist's experiments, and more than half have failed to reproduce their own experiments*' (Monya Baker (2016), 533, issue 7604). A worrying conclusion from that report was that for disciplines such as biology lack of reproducibility of published results has become an accepted norm within the field.

Automating lab protocols can be challenging but represents one way to address the problem of variability of experimental performance between researchers. It is through automation that greater standardisation and precision may eliminate human handling errors that contribute to variation in results. Control of liquid handling, for example, is at the core of recently emerging disciplines such as Computer Aided Biology which facilitate the rapid translation of ideas into results. One of the barriers to the use of automation, however, can be that transferring liquids with accuracy, precision and reproducibility is actually a highly complex operation. Changes in any one of a large number of different factors can exert a substantial effect on any given transfer.

With most automated protocols made up of a great many liquid transfers, sometimes in the thousands of individual operations, the potential for generating and propagating error through an experimental system is considerable. Nevertheless, a single error in only one liquid handling step within a larger protocol can be enough to impact the eventual outcome of that protocol. This problem is traditionally dealt with for a specified piece of hardware by having a pre-established set of liquid handling policies for the different liquid types that the device might at some point handle, however, this represents an insufficient level of granularity of control given the diversity of liquids and real-world experimental conditions that need to be covered. Every potential variance in conditions may represent a factor that has an influence, even if only subtly, upon the eventual success and rate of error of a given experiment. The net effect of liquid handling error, at the very least, is to generate excessive 'noise' in the data that can obscure or eradicate meaningful correlations as well as to reduce overall product yield. Indeed, the incidence of experimental error in any given protocol executed by a laboratory robot may also be highly dependent upon local conditions, reagent selection and selected process steps which will vary from lab to lab.

In addition, there are some liquid transfers that have special requirements beyond accuracy and precision. In cellular biology for example, the transfer of suspensions of mammalian cells, that can be sensitive to sheer forces, is a delicate operation. These transfers can necessitate the optimisation of pipetting/dispensing speeds to minimise sheer whilst still ensuring sufficient mixing to keep cells in even suspension. European Patent Application No. 1191312 A describes a process for optimising pipetting accuracy of a step in an automated liquid handling process measured by % coefficient of variation (%CV). The focus of this approach prioritises repeatability of individual pipetting steps rather than overall process performance.

Therefore, a method for rapidly assessing a multiplicity of liquid handling strategies within an automated set up would be highly advantageous in improving performance of protocols, by improving reliability, yield and/or signal-to-noise ratio, and does not currently exist in the industry. There exists a need for improved systems and methods for the control of automated liquid handling in order to reduce error and wastage, improve efficiency, and generally expand the capability of automated liquid handling processes to carry out even more complex experimental designs.

These and other uses, features and advantages of the invention should be apparent to those skilled in the art from the teachings provided herein.

### SUMMARY OF THE INVENTION

According to the present invention there is provided a computer implemented method for improving the process performance of an automated laboratory protocol according to claim 1 and a device for executing a laboratory protocol according to claim 14.

### BRIEF DESCRIPTION OF THE DRAWINGS

One or more typical embodiments of the invention and disclosure will now be described, by way of example only, with reference to the accompanying drawings, in which:
Figure 1 is a representation of a flow diagram according to one embodiment of the present invention that shows a process for generating and running an array of liquid handling and process policies to optimise an automated biological process;
Figure 2 (A) and (B) are screenshots from liquid handling management software showing particular liquid handling policies implemented for a specific example of the invention;
Figure 3 is a graph showing the coefficient of variation (CV %) of 87 tested automated liquid handling policies, compared with manual (last two runs 88 and 89);
Figure 4 (A) to (C) are a series screenshots of workflows that relate to an embodiment of the invention, in which the ingestion of a Design of Experiments statistical design for laboratory protocol automation is implemented through parameterisation of relevant process factors;
Figure 5 shows the results of an experiment according to one embodiment of the invention;
Figure 6 shows the results as graphs of an experiment according to a further embodiment of the invention;
Figure 7 shows the results as graphs of the same experiment as in Figure 6 but with greater focus on the effects on the process factor of time delay before commencement of automated processing and its effects upon viable cell count; and
Figure 8 shows the results as a graph of an experiment according to a further embodiment of the invention, where Ct is the cycle threshold, A= automated, RT= room temperature, 30 = 30 minutes. 00 = 0 minutes, S = sealed, NS = not sealed, M = manual.

### DETAILED DESCRIPTION OF THE INVENTION

All references cited herein are incorporated by reference in their entirety. Unless otherwise defined, all technical and scientific terms used herein have the same meaning as commonly understood by one of ordinary skill in the art to which this invention belongs.

Prior to setting forth the specific embodiments of the invention, a number of definitions are provided that will assist in the understanding of the invention.

As used in this description, the singular forms "a," "an," and "the" include plural referents unless the context clearly dictates otherwise. Thus, for example, the term "a device" is intended to mean a single device or more than one device or to an assembly comprising a plurality of devices operating in combination. Additionally, any reference referred to as being "incorporated herein" is to be understood as being incorporated in its entirety.

As used herein, the term "systems" also contemplates devices, apparatus, compositions, assemblies, kits, etc., and *vice versa.* Similarly, the term "method" also contemplates processes, procedures, steps, etc., and *vice versa.* Moreover, the term "products" also contemplates devices, apparatus, compositions, assemblies, kits, etc., and *vice versa.*

As used herein, the term "comprising" means any of the recited elements are necessarily included and other elements may optionally be included as well. "Consisting essentially of" means any recited elements are necessarily included, elements that would materially affect the basic and novel characteristics of the listed elements are excluded, and other elements may optionally be included. "Consisting of" means that all elements other than those listed are excluded. Embodiments defined by each of these terms are within the scope of this invention.

The term "substantially" refers to the complete or nearly complete extent or degree of an action, characteristic, property, state, structure, item, or result. The exact allowable degree of deviation from absolute completeness may in some cases depend on the specific context, as would be understood to the person of skill in the art. However, in general terms the nearness of conformity to the absolute will be such as to have the same overall result - e.g. functional equivalence - as if total conformity were achieved. For example, when referring to substantially all of a biological protocol it may be accepted as meaning a majority, or at least 80%, or 90% or 95% or even 99% of the liquid handling steps defined in that protocol.

The term "laboratory protocol" is used herein to denote a series of experimental stages or steps that may be comprised within a specified chemical or biological process. The protocol may include one or more steps that involve reagent and/or liquid handling that may result in the performance of chemical and/or biological reactions and/or growth. In accordance with at least one embodiment of the invention the laboratory protocol may include steps or stages that are analytic or synthetic in intention. In a specific embodiment of the invention the laboratory protocol may be comprised of one or more unit operations. Suitably, a unit operation may be selected from one or more of: a conversion; a reaction; a purification; a construct assembly step; an assay or analysis such as a quantification of a product, a by-product or reagent; a sequencing of nucleic acids; a physical mixing; a centrifugation; a spreading or physical plating of a sample; the selective sampling of a sub population of a sample, such as colony picking; the three dimensional placement of a sample into a structural matrix; a nucleotide or protein/peptide synthesis; a fermentation; a cell culture; an incubation; a restriction; a ligation; a mutation; a transformation; a separation such as chromatography; a filtration; a concentration; an evaporation; a desiccation; a wash; an extraction; the conditioning of a product (e.g. for storage); and an amplification (e.g. with respect to a nucleic acid). It will be appreciated that the aforementioned does not represent an exhaustive list of potential unit operations, which are typically reliant upon the precise nature of the chemical or biological protocol that is to be implemented.

The terms "process performance" as used herein are intended to include a quantitative or qualitative assessment of the performance of the automated laboratory protocol. Improvement of process performance may be assessed in terms of multiple process parameters understood by the skilled person, which may include but are not limited to: an improvement in product yield or product quality; a reduction in use of reagents, energy or consumables; a reduction in time taken for the process as a whole or in part to be completed; more efficient use of time scheduling, energy or resources; more efficient planning of experimental workflows; more efficient reporting of experimental results, milestones or stage gates; and/or a reduction in experimental/process complexity.

As used herein the term "liquid handling step" Refers to a discrete stage within a larger process or unit operation in which one or more liquids is subject to some form of physical manipulation and/or processing. By way of non-limiting example, manipulation and/or processing can include a step in which liquid media, reagents, buffers or samples that are comprised within the protocol are dispensed, aspirated, mixed, or otherwise transformed or transported. Processing or manipulation may occur within a single location or container, or the protocol may involve transportation of a liquid from a first location to a second, third, fourth or other locations within a defined physical space. The manipulation and handling of liquid may occur within a defined configuration of space, such as within the geometric boundaries of a multi-well plate. In this instance a first location would be defined as a first well and second or more locations would be defined as other destination wells within the defined geometry of the multi-well plate. Liquid handling would involve aspiration and dispense of liquids and, thus, transference of liquids from one well to another in order to undertake the reactions defined within the specified protocol.

As used herein "parameter variation" relates to selection of a change in condition, amount, or level, typically within certain defined limits. The defined limits may represent variations around a preferred optima, such as either side of a perceived maxima or minima for the parameter. Alternatively, the limits might fall within or close to the boundary of a functional range. It is usual that the parameter variations selected are within reasonable operating limits for the given protocol. In embodiments of the invention the parameter variation might be levels that conform to the -1, 0, +1 format where the '0' level can be the established 'normal' value and the '-1' and '+1' values represent variants that are equidistantly spaced but on opposite sides of the '0' parameter. Alternative embodiments may provide for only two parameter variations (e.g. 0 and +1; or 0 and -1) or greater than three parameter variations. In some instances, parameter variation may exist between two states where the specified variable is either present or not present, for example.

The term "liquid" may refer to any non-gaseous fluid material that can be readily subjected to automated physical manipulation and/or processing within a laboratory protocol. Suitably, the liquids subject to processing or manipulation may include biological or environmental samples, buffers, solvents, reagents, solutions, cell or bacterial cultures, culture media, foams, emulsions, suspensions, and ionic liquids. Typically, the various liquids utilised within such protocols will exhibit a range of physical properties, such that different reagents and components comprised with the protocol will require handling that is best optimised to the specific physical needs of the liquid as well as to accommodate any other liquid that it may come into contact with/be mixed with. Physical properties of a liquid, therefore, may be considered to include: viscosity (kinetic and dynamic); surface tension; charge; hydrophobicity; conductivity and/or resistivity; volatility; rheology; stability; temperature; and/or sheer sensitivity. Specific parameters associated with these physical properties may also be important considerations such as melting point, evaporation/dew point, flash point, or glass transition temperature.

The rheological state of a given liquid may be considered especially in relations to the composition of a liquid. For example, flow properties will depend upon the composition of the liquid and whether it comprises particles, biological material such as cells (e.g. bacterial or eukaryotic) or vesicular components (e.g. exosomes, liposomes or other emulsion systems). Further whether the liquid is non-newtonian fluid, or a foam/solution/emulsion/suspension, should also be considered as factors that may affect liquid handling and could contribute to error if not accommodated accordingly. One key measure of rheological state relates to the assessment of viscosity and can be assessed as either the dynamic viscosity or the kinematic viscosity of the liquid. Dynamic viscosity, η, can be obtained by multiplying the kinematic viscosity, v, by the density, ρ, of the liquid (e.g. see ASTM test method D445-03). The SI unit typically used for kinematic viscosity is mm²/s, and for dynamic viscosity is mPa·s. Density is a fundamental physical property that can be used in conjunction with other properties to characterize the liquid being handled. Density of a liquid will usually vary according to the temperature.

Chemical properties of a liquid that is subject to handing within a laboratory protocol may be contingent upon ionic content (e.g. Na⁺, K⁺, Ca²⁺, or Cl⁻ content), pH, or total organic carbon content.

Liquids handled within processes, such as bioprocesses, may also possess discrete properties that are distinctive and contributory to potential liquid handling error if overlooked. Such properties may include cellular/optical density of microbial (e.g. bacterial) or eukaryotic cells (e.g. animal, fungal, or plant/plant protoplast cells); biomolecular composition (e.g. nucleic acid, protein, peptide, cytokine or oligo-/polysaccharide concentration); concentration of biomolecules, including metabolites and waste products; properties that can be analysed and are indicative of cell health, cell viability or cell reproducibility; and biopolymer integrity (e.g. integrity of nucleic acid - single-stranded and double-stranded; proteins, polypeptides, polysaccharides etc.).

In accordance with embodiments of the invention the parameters under consideration may also be determined from the physical manipulation and/or processing steps performed by the automation apparatus/robotic device. Typically, liquid handling devices will comprise a platform, that may include a centrally positioned surface, that integrates with one or a variety of automated and movable pipetting or other liquid handling technologies (e.g. mechanical or acoustic). The platform accommodates a range of containers which may be selected from microwell plates, test tubes, flasks, beakers, cartridges and vials. Usually the containers will conform to standard laboratory ware and glassware. For example, a microwell plate is typically manufactured from a plastic material (such as polystyrene or polypropylene) and has at least 6, 12, 24, 48, 96, 384, 1536 or more sample wells arranged in a 2:3 rectangular matrix. The platform may comprise recesses, clamps, surfaces or other mechanisms for anchoring the containers in a fixed location for at least one liquid handling operation. Optionally the containers may be comprised within locomotory apparatus that enables their movement relative to the platform such that further operations may be performed upon them in different parts of the apparatus - e.g. incubation, storage, analysis, cleaning or disposal. Such robotic systems are typically highly configurable allowing for a dynamic functional range depending upon the types of protocols that are to be performed. In some instances, a particular automation apparatus/robotic device may be designated to perform a single protocol for the entirety of its working life. Alternatively, the automation apparatus/robotic device may serve as an experimental workstation that is intended to perform different protocols on a daily or weekly basis. Devices may comprise analytic modules or functionality including plate readers for detection of reactions involving absorbance, fluorescence intensity, luminescence, time-resolved fluorescence, and/or fluorescence polarization. Further, sample/reagent tracking functionality may be provided by uses of NFC tagging or barcode labelling of containers utilised within specific protocols. Additional automated functionalities may include lid handling, container washing, agitation, heating and chilling, as well as sterilisation. Examples of liquid handling systems suitable for the performance of automated laboratory protocols may include Freedom EVO (Tecan), Fluent (Tecan), JANUS^{®} (PerkinElmer), Biomek^{®} (Beckman Coulter), Microlab STAR^{®} (Hamilton Robotics) Microlab VANTAGE^{®} (Hamilton Robotics), EpMotion^{®} (Eppendorf), Echo^{®} (LabCyte), Mosquito^{®} (TTP Labtech), OT-1 and OT-2 (Opentrons), LYNX^{®} (Dynamic Devices), PIPETMAX^{®} (Gilson), and Bravo (Agilent). Examples of dispensers suitable for the performance of automated laboratory protocols may include SPT Dragonfly Discovery^{®}, Formulatrix Mantis^{®}, and Thermo Scientific Multidrop. Examples of acoustic liquid handlers suitable for the performance of automated laboratory protocols may include Beckman Coulter Echo Acoustic series liquid handlers. Examples of optofluidic systems suitable for the performance of automated laboratory protocols include Berkley Lights The Beacon^{®}, The Lightening^{™} and The Culture Station^{™} platforms

In an embodiment of the invention a device is configured to perform the process improvement or optimisation procedure prior to executing a laboratory protocol that comprises one or more liquid handling steps. In an alternative embodiment the device is configured to perform the process improvement or optimisation procedure fully or partially concurrently with the execution of a laboratory protocol that comprises one or more liquid handling steps. In embodiments of the invention the device may include a (computer) system. The system can be configured for engineering compliant communications. The system can comprise one or more processors and one or more computer-readable storage media. The computer readable storage media can have stored thereon computer-executable instructions that are executable by the one or more processors to cause the computer system to perform the methods and procedures described herein. Typically, the processor(s) adjusts the laboratory protocol by regulating one or more operation of the automated liquid handling system. In this way process parameters within the protocol are adjusted. Optionally, the processor adjusts the laboratory protocol by changing an input reagent requirement/specification. In embodiments of the invention the automated liquid handling system may comprise one or more of: a pipette; a pipette tip feeder; a plate reader; a plate handling system; a thermocycler; an agitating/vibrational mixer; an aspirator; an ultrasound mixer; an incubator; a chiller unit; and a fluid dispenser.

In yet a further embodiment of the invention the device and/or system further comprises a graphical user interface (GUI), or alternatively the device is in communication with a remotely located GUI. Suitably, the communication may be wireless or hard wired, such as via a docking interface. The GUI may comprise a mobile device (e.g. a smartphone), a tablet, a laptop or a desk top computer. The user may define or control operation of the liquid handling device via an app or appropriate software, in order to initiate the methods described herein. The app or software package may comprise operative instructions to perform a protocol as described, monitor the output results as well as enable the user to interrogate the results. Typically, software for undertaking such a method comprises a workflow editor allowing for a drag and drop style experimental design approach combined with ready execution of liquid handling through integration with standard laboratory hardware. Suitable software includes Antha^{®} (www.synthace.com). In embodiments of the invention the GUI comprises a processor that controls the design and implementation of the liquid handling optimisation procedure - e.g. using software platforms such as Antha^{®}. Interaction between the processor and the laboratory apparatus may be mediated via an API allowing direct interaction with the software that controls the laboratory hardware. Alternatively, the output of the design and implementation phase may be a document or file - such as a .csv or .exe file - that is transmitted, uploaded to or otherwise installed on the one or more processors controlling the laboratory liquid handling device and when executed controls the implementation of the liquid handling optimisation procedure. The results of the procedure may likewise be transmitted or downloaded/transmitted to one or more processors for further analysis according to the methods of the invention described above.

Suitably, performance of a plurality of test runs on an automated system is carried out under automated control of at least one processor. Accordingly, at least one or more test results generated by the plurality of test runs is communicated to the at least one processor. Alternatively, at least one or more test results generated by the plurality of test runs may be communicated to a remote location. Optionally, the remote location may comprise a remote analytics server, which may also be a cloud-based analytics server.

According to an embodiment of the invention, the optimisation of process performance, and analysis of the results of test runs, performed by the liquid handling apparatus to determine the effects of any parameter variations for each of the process factors is carried out using an optimisation algorithm. The optimisation algorithm may be selected from any one of several known approaches, such that the selected or selection of alogrithms/methods provide required statistical power/resolution, minimise economical costs of the optimisation challenge, provide assumed scientific insights and analyse a best fit approach over a specified region of design space, and/or that use iterative approaches to reduce variability to provide optimised solutions. In certain embodiments, methodologies that utilise a response surface approach that incorporates statistical and mathematical methods useful for the modelling and analysing process optimisation problems. In this technique, a primary objective is to optimize the response surface that is influenced by various process parameters. Response surface methodology also quantifies the relationship between the controllable input parameters and the obtained response surfaces. Hence, optimisation algorithms may include, but are not limited to, Bayesian experimental design, Monte Carlo method, or Design of Experiments (DoE) approaches selected from the group consisting of: a factorial or fractional factorial, including central composite or Box-Wilson designs, or a Box-Behnken designs, a Plackett-Burmann design, a Taguchi method, and definitive screening designs which all may incorporate some form of response surface methodology. In an alternative approach the optimisation algorithm comprises a genetic algorithm/evolutionary natural selection computational methodology. In a further embodiment of the invention the optimisation algorithm comprises a linear programming or simplex method. Alternatively or in addition, in embodiments of the invention, the optimisation algorithm comprises a constraint satisfaction method.

Automated liquid handling may be used for a wide range of biological and chemical procedures, experiments and synthetic processes. The scope for laboratory automation can encompass virtually any experimental procedure. In addition, high-throughput screens, diagnostic assays, and a wide variety of '-omics' based analyses are made possible with the high bandwidth and procedural accuracy afforded by automation. Presently, laboratory automation of liquid handling is used extensively for serial dilutions, microwell plate replication and reformatting for high-throughput screening, PCR setup, whole genome amplification, and cell culture. However, it is an advantage of the present invention, that by allowing for reduction and elimination of liquid handling error a wide variety of liquids can be successfully handled allowing for a far greater range of experiments and processes to be automated successfully.

In specific embodiments of the invention the liquid handling parameters assessed may relate to the automation properties including make and/or model of the liquid handling apparatus itself as well as any functional components comprised within the system. Functional components might include the make, model or serial number of a plate reader, heater or chiller unit. In addition, if a particular configuration; and/or setup of liquid handling apparatus is used this may also be considered. Physical or acoustic liquid handling control of liquid aspiration and dispensing may be considered as falling within the broader definition of pipetting properties. Along with the inherent properties of the liquid that is to be handled, these parameters have a direct effect upon the liquid handling of the system as a whole and may include aspirate speed; dispense speed; mix speed; waiting time between operations; whether an excess volume is utilised (aspirated or dispensed). The positioning of a pipette tip in terms of an aspirating/dispensing step relative to the container/liquid being addressed as well as tip movement velocity and distance between sequential operation may exert an effect upon the protocol. Whether or not a liquid aliquot is subject to blowout (yes / no); whether a pre-wet of tip is carried out (including number of and volume used to pre-wet tip); the number of tip uses may be key factors in certain embodiments of the invention. In addition, it is well known that the shearing action of aspirating or dispensing a liquid in a pipette can be utilised as a mixing operation, hence, the presence and duration (e.g. number of cycles, pulsed or continuous dispensing action) associated with pre-mix of liquid source; or post-mix of liquid destination may be considered. The liquid source volume and/or liquid source depth as well as liquid destination volume and/or depth may also be important factors either alone or in combination with other parameters.

Material and geometric parameters may affect handling error in automation that utilises liquid handling with a permanent or disposable pipetting tips. In such configurations parameters of the tip itself will affect the liquid handling properties of the apparatus as a whole including: size; tip capacity; presence of a filter within the tip; whether the tip is fixed or not; conductive/nonconductive; tip material (e.g. polypropylene, or other plastics material, glass, or metal/metal alloy); bore size; tip make (e.g. manufacturer identity and/or batch number); tip coating if any; and/or tip design or geometry.

In addition to the parameters and properties that are related to the liquids being handled and the apparatus actively handling those liquids, as described above, further factors may be considered that are related to the containment choices selected during a given protocol. The geometry - including the shape, volume and configuration - of the source and/or destination container for a given liquid transfer step may be relevant to the performance of the protocol. The material properties of source and destination containers are also important, including the presence of any coatings on the container materials. By way of example coatings that increase hydrophobicity of surfaces such as siliconization or coating with polymers such as PDMS or PTFE (Teflon^{®}) when applied to the container, or even the interior or exterior surfaces of a pipette tip, will affect the fluid dynamics of a liquid being handled, particularly if the liquid comprises a polar solvent such as water. Likewise, selection of hydrophilic coatings, with hydrophilic polymers such as polyethylene glycol) (PEG) and zwitterionic polymers such as poly(carboxybetaine methacrylate) (PCB), poly(sulfobetaine methacrylate) (PSB) and poly(2-methacryloyloxyethyl phosphorylcholine) (PPC), can affect fluid dynamics of non-polar as well as polar solvent based liquids alike.

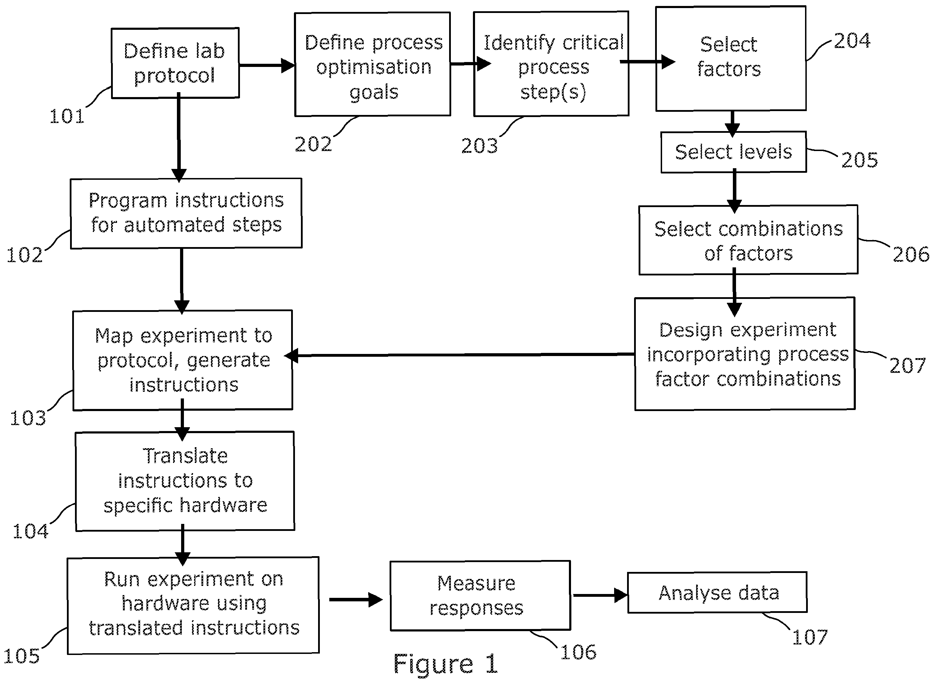

A specific embodiment of the invention is set out in the workflow described in Figure 1. An experimental or synthetic laboratory protocol is defined 101. The protocol involves one or more liquid handling (LH) steps. The user may wish to define specific process optimisation goals 202, for instance reduction in pipetting error, process yield, improved handling of one or more difficult to handle reagents or products, or any other suitable objective as defined herein. Consideration of one or more critical process, including liquid handling, steps 203 in the protocol defined in 101 follows, and the variable parameters (termed 'factors') that affect these steps are selected 204. For each parameter/factor suitable levels are selected 205 that represent testable variations within a preferred operating range or around a particular optima, maxima or minima (see above). Levels may also be presence or absence of a specified factor. A selection of combinations of factors 206 may be made to assist in identifying one or more higher order multifactorial interactions. An experiment is designed 207 that incorporates the selections of 204, 205 and 206 into a process optimisation protocol. In parallel to design of the experiment 207, the lab protocol 101 is translated into instructions suitable for undertaking automation 102. The experiment 207 may then be mapped onto the automated protocol 102 to generate machine interpretable instructions for execution of the experiment 103, 104. The experiment 207 is executed using laboratory hardware 105. Output and results from the experiment are logged and measured accordingly 106. Data generated from the experiment is analysed 107 to identify process handling factors 204, levels 205 and/or multifactorial interactions 206 that have a significant effect upon performance of the laboratory protocol 101.

In accordance with a specific embodiment of the present invention, process factors for at least one liquid handling step in an automated protocol are selected from the following factor classes:
(I) equipment process factors;
(II) liquid process factors; and
(III) protocol process factors.

Suitably, the equipment process factors (I) may be selected from the group consisting of: an automation factor; a pipetting factor; a pipette tip factor; a dispensing factor; and a containment factor. Automation factors may be selected from the group consisting of: make and/or model of liquid handling apparatus; configuration of liquid handling apparatus; and setup of liquid handling apparatus. Whilst, pipetting factor may be selected from the group consisting of: aspirate speed; dispense speed; mix speed; waiting time; excess aspirated volume; excess dispensed volume; aspirate/dispense position relative to the container/liquid being addressed; tip movement speed; blowout choice; pre-wet of tip; number of tip uses; pre-mix of liquid source; post-mix of liquid destination; liquid source volume; and liquid source depth. The pipette tip factor may be selected from the group consisting of: pipette tip size; pipette tip capacity; presence or absence of filter; fixed or removable tip; conductive properties of tip material; selection of tip material; bore size; tip make; tip coating; tip geometry; and batch number. Typically, the dispensing factor may be selected from the group consisting of: amount of liquid in destination well; type of liquid in destination well; force of dispense; choice of pulsed dispense or continuous dispense; duration of dispense; and selection of acoustic or physical dispense. Whereas the containment factor may be selected from the group consisting of: containment properties; source container geometry; destination container geometry; source container material; destination container material; and destination container capacity.

The liquid process factors (II) are suitably selected from the group consisting of: a physical liquid factor; a stability factor; a chemical liquid factor; and a biological liquid factor. Optionally, the physical liquid factor is selected from the group consisting of: viscosity; surface tension; charge; hydrophobicity; volatility; rheology; liquid temperature; and sheer sensitivity. The stability factor may be selected from the group consisting of: temperature lability; light lability; chemical stability; and biochemical stability. The chemical liquid factor may be selected from the group consisting of: pH; ion content; total organic carbon content; solute identity; and radioisotope content. Whilst, the biological liquid factor may be selected from the group consisting of: cell survival; cell density; cell stability; cell health; biomolecular composition; biomolecular concentration; cell health; and biopolymer integrity.

The protocol process factor (III) may be typically selected from the group consisting of: an environmental factor; an agitation factor; and a timing factor. The environmental factor is optionally selected from the group consisting of: environmental temperature; environmental humidity; barometric pressure; atmospheric circulation; atmospheric flow rate; electromagnetic radiation exposure levels; and type of electromagnetic radiation. The agitation factor may be selected from: presence or absence of agitation; type of agitation; and amount of agitation. Whilst, the timing factor may be selected from the group consisting of: timing of protocol; presence or absence of time delay between process steps; length of time delay between process steps; and number of time delays between process steps.

As described previously, suitable parameter variations may be selected for at least one, two, three, four or more liquid handling steps in a given automated protocol. Typically, at least two parameters identified and are varied per liquid handling step selected. However, it is an option to select more than two parameters, or even more than three parameters to be varied per liquid handling step. The multifactorial nature of these variations will identify a range of higher order interactions that may exhibit a determinative influence upon overall process performance in a manner that is entirely non-obvious and super additive. Indeed, by combining variation of parameters from different factor classes (see (I) to (III) above) some highly disparate interactions can be identified that may contribute in an entirely surprising way to improve commercial performance or improve sustainability (i.e. reduce environmental impact) of a specific automated process.

In a specific embodiment of the invention the aforementioned method comprises at least first and second process factors that are different and wherein the first process factor is an equipment process factor. The second process factor is selected from either of a liquid process factor; and a protocol process factor.

In another embodiment of the invention the aforementioned method comprises at least first and second process factors that are different and wherein the first process factor is a liquid process factor. The second process factor is selected from either of; an equipment process factor and a protocol process factor.

In yet another embodiment of the invention the aforementioned method comprises at least first and second process factors that are different and wherein the first process factor is a protocol process factor. The second process factor is selected from either of; an equipment process factor and a liquid process factor.

In still another embodiment of the invention the aforementioned method comprises at least first, second and third process factors and wherein the first and second process factors are different equipment process factors. The third process factor is selected from either of a liquid process factor; and a protocol process factor.

Devices and apparatus may be configured to operate the methods of the invention as described herein. Such devices may be existing liquid handling systems, such as those set out above. In embodiments of the invention the device comprises or is comprised within a laboratory pipetting robot. Suitably the device comprises an automated liquid handling system selected from the group consisting of: a dispenser; an acoustic liquid handler; and an optofluidic liquid handler.

The invention is further illustrated by the following non-limiting examples.

### EXAMPLES

### EXAMPLE 1

### Optimisation of a liquid handling step in an automated qPCR protocol to autoqenerate a range of liquid handling policies

A table of liquid handling policies was generated in statistics software, such that each liquid handling factor to be investigated was systematically varied. Parameter variations were made over three levels (e.g. -1, 0, +1) for each factor identified. Processing factors identified and varied included aspiration speed, dispense speed, blow out volume, post blow out mix, aspiration delay, dispense delay, extra aspiration volume, and post dispense mix rate. Constraints were applied to incompatible factors. For example, additional aspirate can be used to take up extra volume, and only the amount specified is then dispensed, leaving some volume in the tip. This strategy is incompatible with a blowout, where the amount specified is taken up, then additional volume is dispensed, pushing air out after the liquid. The combination of these two strategies would result in a very large over-transfer, so this combination was excluded.

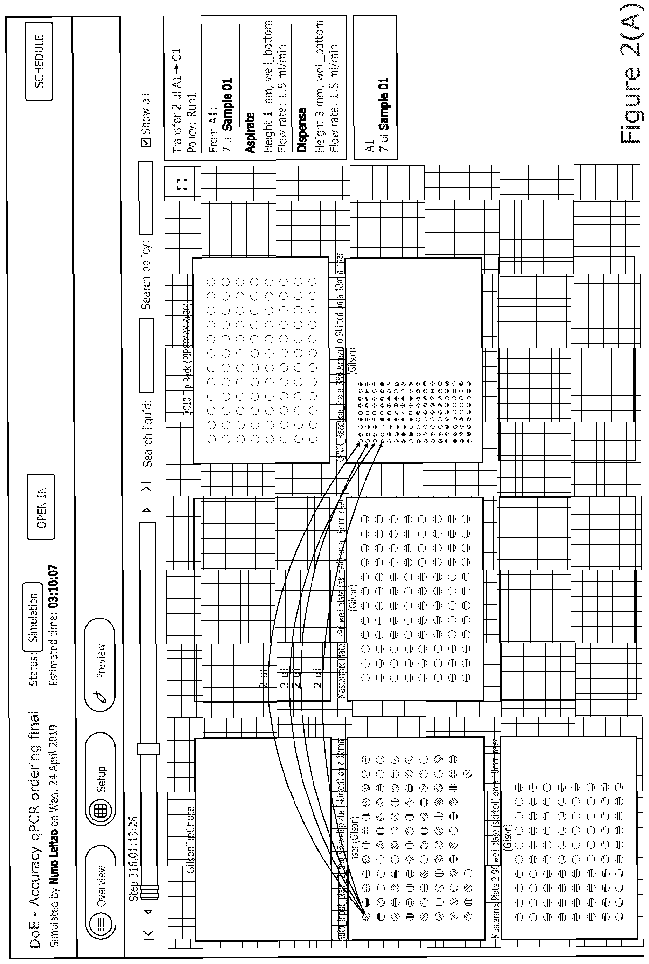

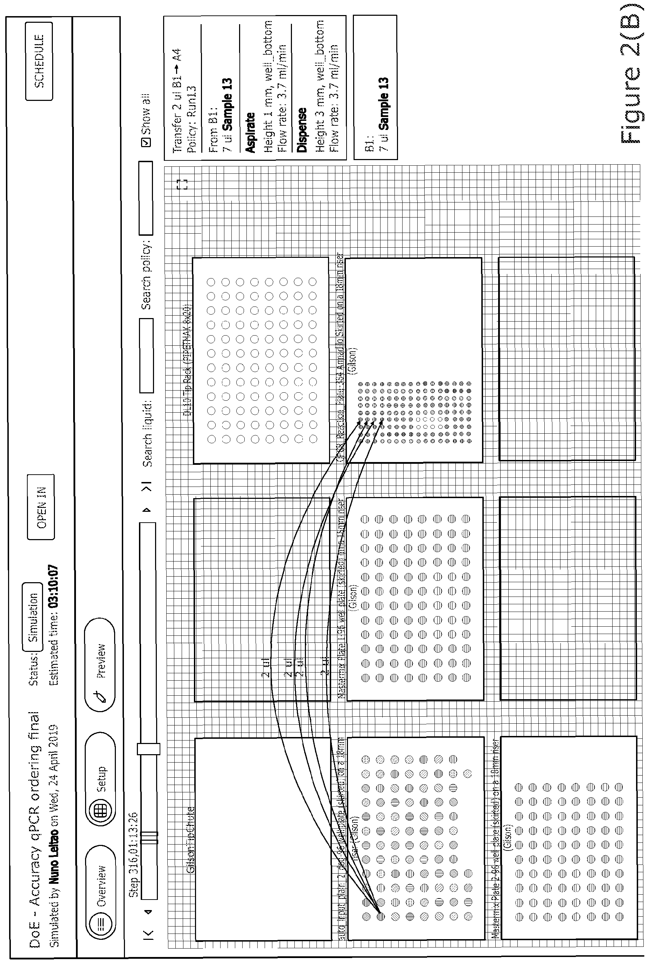

The final, constrained table of 87 liquid policies was generated and uploaded into the automated process management software tool, Antha^{®}, which mapped the specified liquid handling policies against 87 samples in a qPCR protocol. For the purpose of optimising liquid handling in this experiment, each of the samples was identical, such that the only difference in output would be from the differences in the processing of liquid handling. The protocol was set such that 2 µl of each sample was transferred on to the qPCR reaction plate 4 times using the specified liquid handling policy. Figure 2 (A) and (B) show screen shots taken from the liquid handling management software for two of the liquid handling policies tested (Run numbers 1 and 13 - see also Table 1 below). These two policies vary in that the aspiration and dispense speeds for Run 1 are both 1.5 ml/min (see Figure 2(A), right hand panel) whereas for Run 13 the respective speeds are both 3.7 ml/min. Equivalent factor variations were made of the other 85 policies under test and are shown in Tables 1 and 2.

The liquid handling management software auto-generated instructions that incorporated the specified liquid handling actions for each sample. The instructions were then translated to the format needed for a liquid handling device (in this case, a Gilson Pipetmax^{®}), and these translated instructions were used to run the array of liquid handling policies in the context of the qPCR protocol on the device. A non-exhaustive list of exemplary liquid handling process parameters are set out in Table 2. Some parameters may be varied or kept as constant as required.

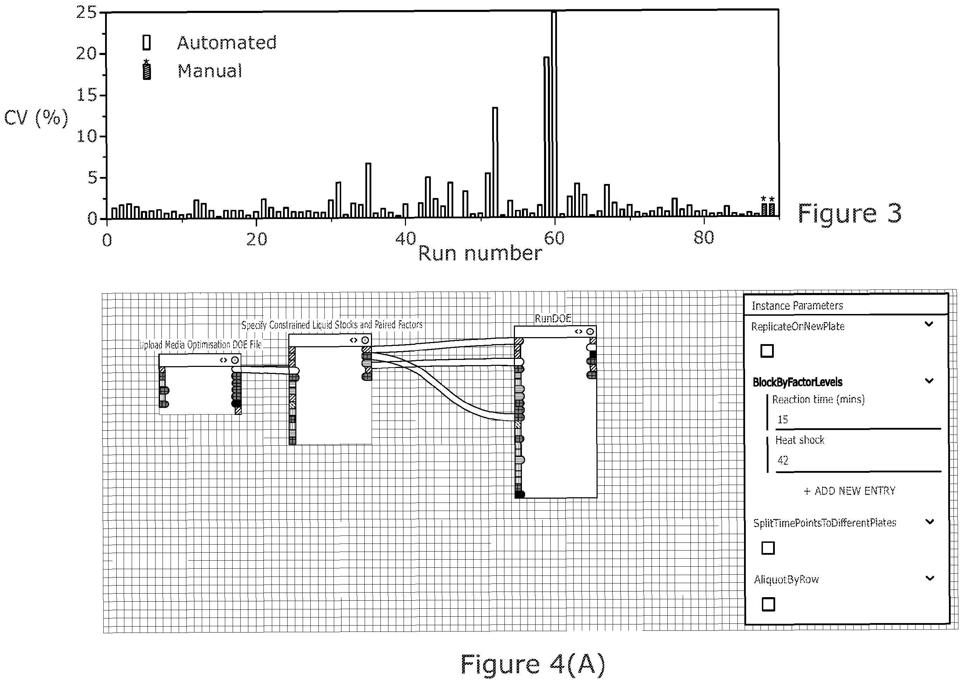

The resulting qPCR reactions were then run in a qPCR machine, and the data from each set of four replicates was used to calculate a coefficient of variance (CV) resulting from each liquid handling policy tested. The automated variances were compared against manual controls. Many of the liquid handling policies performed better than manual, some of them substantially so. The variation in output across the 87 polices tested was striking and highly unexpected, especially considering that the reagents and starting materials were identical for each sample (see Figure 3). In the most extreme cases a CV% of as much as 25% was observed, but also a significant number of runs were substantially better than achieved by manual operators. As is apparent from the results the significant improvements in liquid handling are not necessarily due to apparent or obvious process variations. Likewise, the reasoning for situations where very high CV% was obtained is also not immediately evident from initial review of the parameter variations selected. This exemplifies the inherent level of multifactorial variability that exists within liquid handling processes and protocols and which is not eliminated merely by adoption of laboratory automation. The results show that poor implementation of automation may result in liquid handling variation significantly worse than that exhibited by manual operators. Hence, there exists a need for the present methodology as defined herein which can be implemented on a protocol-by-protocol basis and which improves reliability and traceability of results.

The methods described, therefore, provide very rapid improvements on automated liquid handling which would be highly arduous or not possible to assess manually.

**Table 1 - Parameter Variations for 88 Automated Liquid Handling Policies**

| **POLICY NAME** | **ASPIRATION SPEED (ml/s)** | **DISPENSE SPEED (ml/s)** | **BLOWOUT VOLUME (µl)** | **POST MIX (number of cycles)** | **ASPIRATION _WAIT (seconds)** | **DISPENSE WAIT (seconds)** | **EXTRA ASPIRATION VOLUME (µl)** | **POST MIX RATE (ml/s)** |
|---|---|---|---|---|---|---|---|---|
| Run1 | 1.5 | 1.5 | 0 | 0 | 0 | 2 | 2 | 3.7 |
| Run2 | 3.7 | 3.7 | 5 | 5 | 0 | 2 | 0 | 1.5 |
| Run3 | 1.5 | 1.5 | 0 | 5 | 0 | 2 | 0 | 3.7 |
| Run4 | 1.5 | 3.7 | 5 | 5 | 2 | 0 | 0 | 3.7 |
| Run5 | 2.6 | 2.6 | 0 | 0 | 1 | 1 | 1 | 2.6 |
| Run6 | 3.7 | 3.7 | 0 | 0 | 2 | 0 | 2 | 3.7 |
| Run7 | 3.7 | 1.5 | 0 | 0 | 0 | 0 | 2 | 1.5 |
| Run8 | 1.5 | 1.5 | 5 | 5 | 2 | 2 | 0 | 1.5 |
| Run9 | 1.5 | 1.5 | 0 | 0 | 2 | 2 | 0 | 3.7 |
| Run10 | 2.6 | 2.6 | 0 | 0 | 1 | 1 | 1 | 2.6 |
| Run11 | 3.7 | 1.5 | 0 | 0 | 2 | 0 | 2 | 3.7 |
| Run12 | 3.7 | 3.7 | 5 | 0 | 2 | 2 | 0 | 1.5 |
| Run13 | 3.7 | 3.7 | 0 | 0 | 2 | 2 | 2 | 1.5 |
| Run14 | 2.6 | 2.6 | 0 | 0 | 1 | 1 | 1 | 2.6 |
| Run15 | 2.6 | 2.6 | 0 | 0 | 1 | 1 | 1 | 2.6 |
| Run16 | 3.7 | 3.7 | 5 | 0 | 0 | 0 | 0 | 1.5 |
| Run17 | 3.7 | 3.7 | 0 | 5 | 2 | 2 | 0 | 3.7 |
| Run18 | 3.7 | 1.5 | 0 | 5 | 0 | 2 | 0 | 1.5 |
| Run19 | 1.5 | 1.5 | 0 | 0 | 0 | 2 | 2 | 1.5 |
| Run20 | 2.6 | 2.6 | 2.5 | 2.5 | 1 | 1 | 0 | 2.6 |
| Run21 | 3.7 | 3.7 | 0 | 0 | 0 | 0 | 2 | 1.5 |
| Run22 | 3.7 | 3.7 | 0 | 0 | 0 | 0 | 2 | 3.7 |
| Run23 | 1.5 | 3.7 | 0 | 5 | 2 | 2 | 0 | 1.5 |
| Run24 | 3.7 | 1.5 | 5 | 0 | 0 | 2 | 0 | 3.7 |
| Run25 | 1.5 | 1.5 | 0 | 0 | 0 | 0 | 2 | 1.5 |
| Run26 | 3.7 | 3.7 | 0 | 5 | 0 | 0 | 0 | 3.7 |
| Run27 | 2.6 | 2.6 | 0 | 0 | 1 | 1 | 1 | 2.6 |
| Run28 | 2.6 | 2.6 | 2.5 | 2.5 | 1 | 1 | 0 | 2.6 |
| Run29 | 2.6 | 2.6 | 0 | 0 | 1 | 1 | 1 | 2.6 |
| Run30 | 3.7 | 3.7 | 0 | 0 | 2 | 2 | 2 | 3.7 |
| Run31 | 3.7 | 1.5 | 0 | 0 | 0 | 2 | 2 | 1.5 |
| Run32 | 1.5 | 3.7 | 5 | 5 | 0 | 2 | 0 | 3.7 |
| Run33 | 1.5 | 1.5 | 0 | 0 | 2 | 0 | 2 | 3.7 |
| Run34 | 2.6 | 2.6 | 0 | 0 | 1 | 1 | 1 | 2.6 |
| Run35 | 1.5 | 3.7 | 0 | 0 | 0 | 2 | 2 | 1.5 |
| Run36 | 2.6 | 2.6 | 2.5 | 2.5 | 1 | 1 | 0 | 2.6 |
| Run37 | 1.5 | 1.5 | 0 | 0 | 2 | 2 | 2 | 3.7 |
| Run38 | 2.6 | 2.6 | 0 | 0 | 1 | 1 | 1 | 2.6 |
| vRun39 | 3.7 | 1.5 | 0 | 0 | 2 | 0 | 2 | 1.5 |
| Run40 | 3.7 | 1.5 | 5 | 5 | 0 | 0 | 0 | 3.7 |
| Run41 | 3.7 | 1.5 | 0 | 0 | 0 | 0 | 0 | 1.5 |
| Run42 | 1.5 | 1.5 | 0 | 0 | 0 | 0 | 2 | 3.7 |
| Run43 | 2.6 | 2.6 | 0 | 0 | 1 | 1 | 1 | 2.6 |
| Run44 | 2.6 | 2.6 | 2.5 | 2.5 | 1 | 1 | 0 | 2.6 |
| Run45 | 1.5 | 1.5 | 0 | 5 | 2 | 0 | 0 | 3.7 |
| Run46 | 2.6 | 2.6 | 0 | 0 | 1 | 1 | 1 | 2.6 |
| Run47 | 1.5 | 3.7 | 5 | 0 | 2 | 0 | 0 | 1.5 |
| Run48 | 2.6 | 2.6 | 2.5 | 2.5 | 1 | 1 | 0 | 2.6 |
| Run49 | 1.5 | 1.5 | 0 | 0 | 0 | 0 | 0 | 3.7 |
| Run50 | 1.5 | 3.7 | 5 | 5 | 0 | 0 | 0 | 1.5 |
| Run51 | 1.5 | 3.7 | 0 | 5 | 0 | 0 | 0 | 1.5 |
| Run52 | 2.6 | 2.6 | 2.5 | 2.5 | 1 | 1 | 0 | 2.6 |
| Run53 | 1.5 | 3.7 | 0 | 0 | 2 | 0 | 0 | 1.5 |
| Run54 | 1.5 | 3.7 | 5 | 0 | 2 | 2 | 0 | 3.7 |
| Run55 | 2.6 | 2.6 | 2.5 | 2.5 | 1 | 1 | 0 | 2.6 |
| Run56 | 1.5 | 3.7 | 5 | 0 | 0 | 0 | 0 | 3.7 |
| Run57 | 1.5 | 3.7 | 0 | 0 | 0 | 0 | 2 | 3.7 |
| Run58 | 2.6 | 2.6 | 2.5 | 2.5 | 1 | 1 | 0 | 2.6 |
| Run59 | 1.5 | 3.7 | 0 | 0 | 0 | 2 | 0 | 1.5 |
| Run60 | 1.5 | 1.5 | 5 | 0 | 0 | 2 | 0 | 1.5 |
| Run61 | 3.7 | 1.5 | 0 | 0 | 0 | 2 | 2 | 3.7 |
| Run62 | 1.5 | 3.7 | 0 | 0 | 2 | 2 | 2 | 3.7 |
| Run63 | 1.5 | 1.5 | 5 | 5 | 0 | 0 | 0 | 1.5 |
| Run64 | 3.7 | 1.5 | 5 | 5 | 2 | 2 | 0 | 3.7 |
| Run65 | 3.7 | 3.7 | 0 | 0 | 2 | 0 | 0 | 3.7 |
| Run66 | 1.5 | 1.5 | 5 | 0 | 2 | 0 | 0 | 1.5 |
| Run67 | 1.5 | 3.7 | 5 | 5 | 2 | 2 | 0 | 1.5 |
| Run68 | 2.6 | 2.6 | 2.5 | 2.5 | 1 | 1 | 0 | 2.6 |
| Run69 | 3.7 | 3.7 | 5 | 0 | 0 | 2 | 0 | 3.7 |
| Run70 | 1.5 | 3.7 | 0 | 5 | 0 | 2 | 0 | 3.7 |
| Run71 | 3.7 | 1.5 | 0 | 5 | 0 | 0 | 0 | 3.7 |
| Run72 | 3.7 | 3.7 | 5 | 5 | 2 | 0 | 0 | 1.5 |
| Run73 | 3.7 | 3.7 | 0 | 5 | 2 | 0 | 0 | 1.5 |
| Run74 | 2.6 | 2.6 | 2.5 | 2.5 | 1 | 1 | 0 | 2.6 |
| Run75 | 3.7 | 1.5 | 0 | 0 | 2 | 2 | 2 | 1.5 |
| Run76 | 2.6 | 2.6 | 2.5 | 2.5 | 1 | 1 | 0 | 2.6 |
| Run77 | 1.5 | 1.5 | 0 | 5 | 2 | 2 | 0 | 1.5 |
| Run78 | 1.5 | 1.5 | 0 | 0 | 2 | 0 | 2 | 1.5 |
| Run79 | 3.7 | 1.5 | 0 | 5 | 2 | 0 | 0 | 1.5 |
| Run80 | 2.6 | 2.6 | 2.5 | 2.5 | 1 | 1 | 0 | 2.6 |
| Run81 | 3.7 | 1.5 | 0 | 5 | 2 | 2 | 0 | 3.7 |
| Run82 | 3.7 | 1.5 | 5 | 0 | 2 | 0 | 0 | 3.7 |
| Run83 | 3.7 | 3.7 | 0 | 5 | 0 | 2 | 0 | 1.5 |
| Run84 | 2.6 | 2.6 | 2.5 | 2.5 | 1 | 1 | 0 | 2.6 |
| Run85 | 1.5 | 3.7 | 0 | 5 | 2 | 0 | 0 | 3.7 |
| Run86 | 3.7 | 3.7 | 0 | 0 | 0 | 2 | 0 | 3.7 |
| Run87 | 3.7 | 1.5 | 0 | 0 | 2 | 2 | 0 | 1.5 |
| Run88 | 2.6 | 2.6 | 2.5 | 2.5 | 1 | 1 | 0 | 2.6 |
| basemix | 1.5 | 1.5 | 5 | | 1 | 1 | 0 | |

**Table 2 - Exemplary automated process parameters**

| **Process Parameter** | **Type** | **Description** |
|---|---|---|
| **ASPENTRYSPEED** | number | allows slow moves into liquids |
| **ASPREFERENCE** | integer | Reference point for aspirate: 0 = well bottom, 1 = well top |
| **ASPSPEED** | number | aspirate pipetting rate, this has preference over DEFAULTPIPETTESPEED for Aspirate steps |
| **ASPZOFFSET** | number | mm above ASPREFERENCE when aspirating |
| **ASP_WAIT** | number | wait time in seconds post aspirate |
| **BLOWOUTOFFSET** | number | mm above BLOWOUTREFERENCE |
| **BLOWOUTREFERENCE** | integer | where to be when blowing out: 0 well bottom |
| **BLOWOUTVOLUME** | number | how much to blow out |
| **BLOWOUTVOLUMEUNIT** | text | volume unit for blowout volume |
| **CAN_MULTI** | true/false | is multichannel operation allowed? |
| **DEFAULTPIPETTESPEED** | number | Default pipette speed in ml/min. This will be used for ASPSPEED, DSPSPEED, PRE_MIX_RATE and POST_MIX_RATE if no value is specified |
| **DEFAULTZSPEED** | number | Default z movement speed in mm/s |
| **DSPENTRYSPEED** | number | allows slow moves into liquids |
| **DSPREFERENCE** | integer | where to be when dispensing: 0 well bottom, 1 well top |
| **DSPSPEED** | number | dispense pipetting rate, this has preference over DEFAULTPIPETTESPEED for Dispense steps |
| **DSPZOFFSET** | number | mm above DSPREFERENCE |
| **DSP_WAIT** | number | wait time in seconds post dispense |
| **EXTRA_ASP_VOLUME** | Volume | additional volume to take up when aspirating |
| **EXTRA_DISP_VOLUME** | Volume | additional volume to dispense |
| **MIX_VOLUME_OVERRIDE_TIP_MA X** | true/false | Default to using the maximum volume for the current tip type if the specified post mix volume is too high |
| **POST_MIX** | integer | number of mix cycles to do after dispense |
| **POST_MIX_RATE** | number | pipetting rate when post mixing, this has preference over DEFAULTPIPETTESPEED for Post Mix steps |
| **POST_MIX_VOLUME** | number | volume to post mix (ul) |
| **POST_MIX_Z** | number | z offset from centre of well (mm) when post-mixing |
| **PRE_MIX** | integer | number of mix cycles to do before aspirating |
| **PRE_MIX_RATE** | number | pipetting rate when pre mixing, this has preference over DEFAULTPIPETTESPEED for Pre Mix steps |
| **PRE_MIX_VOLUME** | number | volume to pre mix (ul) |
| **PRE_MIX_Z** | number | z offset from centre of well (mm) when pre-mixing |
| **TIP_REUSE_LIMIT** | integer | number of times tips can be reused for asp/dsp cycles |
| **TOUCHOFF** | true/false | whether to move to TOUCHOFFSET after dispense |
| **TOUCHOFFSET** | number | mm above wb to touch off at |

### EXAMPLE 2

### Bacterial cell transformation

The ability to transform bacterial cells such as E.coli is fundamental to molecular biology. The transformation process itself is unfortunately poorly characterised and open to interpretation. The computer implemented software platform Antha^{®} was used to simultaneously identify biologically relevant liquid handling and process parameters for identification of conditions for a successful biological outcome which can be reapplied digitally as and when needed.

A DoE statistical method was used to optimise the transformation efficiency of E.coli Neb 10 beta cells using a pre-optimised 5 parts Sapl assembly on a Gilson Pipetmax^{®} liquid handler. Antha^{®} was used as part of a three-step process involving: i) ingestion of the statistical experimental design, ii) translation of the experimental design into physical actions and iii) physical execution of the experimental plan on the liquid handing apparatus.

The experimental design focussed on a plurality of process factors that were identified as being of potential importance. The factors identified and tested were broadly related to cell volume, volume of assembly, media volume and volume of cells - all of which leverage the liquid handling instrument's accuracy and precision for that particular defined liquid class. Additional non-liquid handling process factors tested related to agitation/shaking and temperature (e.g. heat shock temperature and ice incubation). This is because although accuracy and precision of liquid handling is important, this is less so in comparison to overall process optimisation as only a single positive transformed E.coli cell can still result in the desired outcome - although of course it is more favourable to encourage greater levels of transformation if possible.

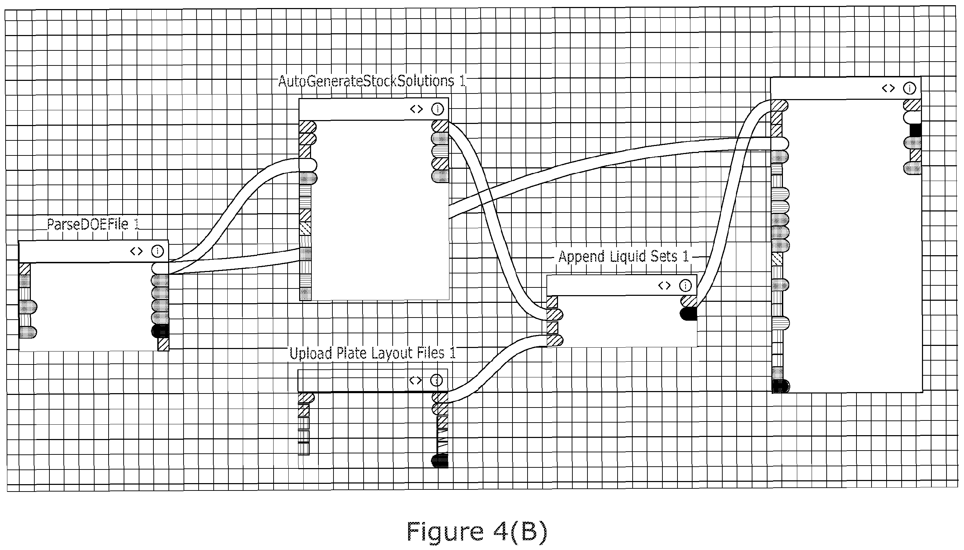

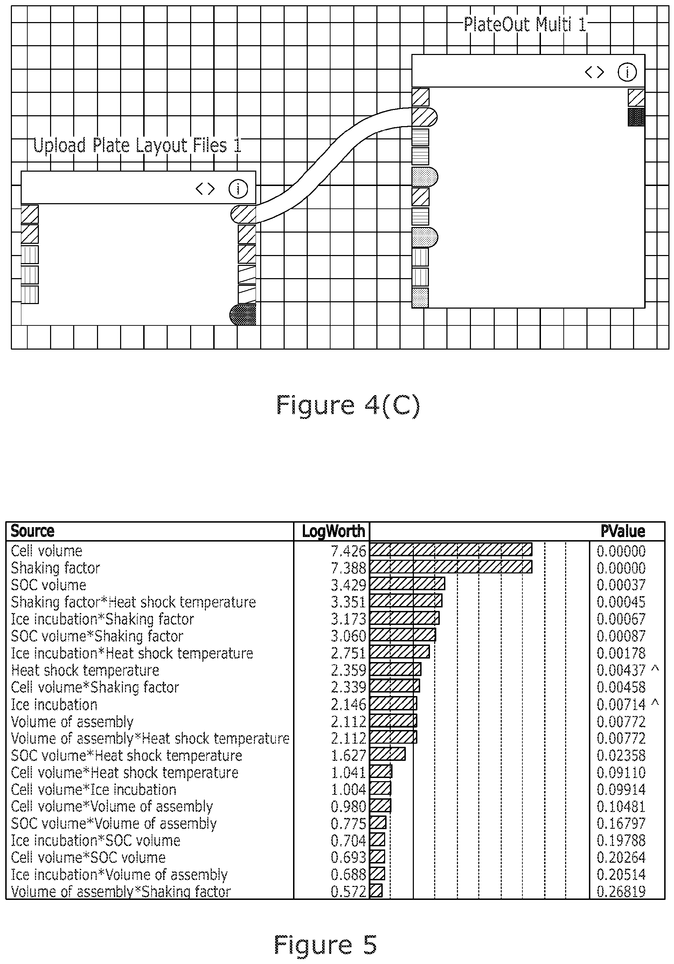

The computer implemented methodology was used to complete the parameterisation of the statistical design, previously ingested, by implementing the biology around it. For example, for the transformation optimisation the method is used to generate the initial transformation design workflow in Antha^{®} (see Figure 4 (A)). The methodology is used across the multi-step transformation protocol to optimise the liquid handling and process parameters into the next step of the workflow: the recovery phase of the transformation step (see Figure 4 (B)). In this step the DNA transformation step of the optimisation process is combined with the recovery phase, optimising both liquid handling and process parameters in combination. Following execution of the experimental design according to the DoE process, the results of multiple runs were plated out onto agar as specified in the workflow (see Figure 4(C)).

The results of the analysis are shown in Figure 5, with the most significant factors shown as single or combinatorial factors indicated as contributing to overall process performance. Cell volume, shaking speed, presence of Super Optimal growth medium with Catabolite repression (SOC), recovery medium and several two factor interactions were identified as highly significant for an optimal automated biological process.

In the case of the present experiment the results were readily translated to a variety of liquid handling systems showing widespread utility and process optimization over a variety of platforms.

### EXAMPLE 3

### Maximising Mammalian Cell Viability During Automation of Laboratory Protocols

Mammalian cells are more complex than their prokaryotic counterparts. Optimising their treatment during automated laboratory processing that requires liquid handling is a multi-objective process. It requires optimisation of factors such as transfer precision, accuracy and cell viability. If cells cannot be transferred in a viable fashion, although precise and accurate, the outcome of the overall process is unfavourable, and may render the results essentially unusable.

As in Examples 1 and 2, Antha^{®} was used as an automated workflow platform to demonstrate the importance of optimising liquid handling factors in combination with process factors in to deliver a successful biological process for an automated protocol. The following multiple factors were optimised in tandem.
- Aspiration speed (5, 10, 15 ml/min) - APSSPEED
- Dispense speed (5, 10, 15 ml/min) - DSPSPEED
- Number of premixes (1,2,3) - PRE_MIX
- Speed of premixing (5, 10, 15 ml/min) - PRE_MIX_RATE
- Time cells left undisturbed before robot start (0 or 60 minutes)

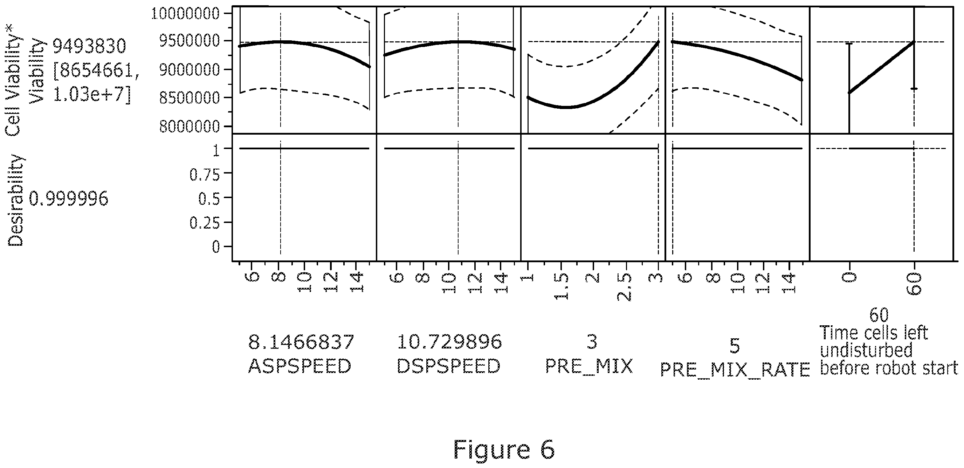

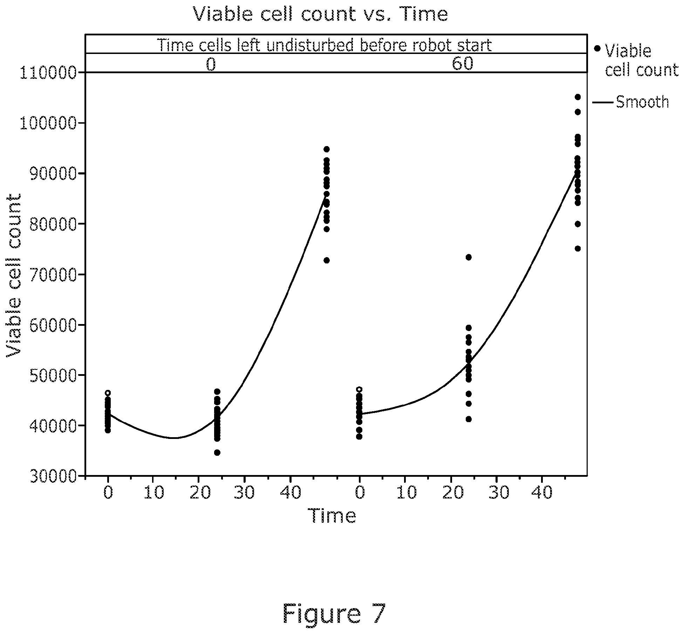

The output from the execution of an experimental design showed that it is possible to increase cell viability as a measure of cellular outgrowth for the length of the experiment (48 hours) by simultaneously optimising for both liquid handling and more general process factors. The effects of parameter optimisation trials in respect of the factors identified are summarised in Figure 6. Surprisingly, the timing process factor was shown to have a significant effect upon the cell viability which would not have been apparent if only liquid handling was considered (see Figure 7)

### EXAMPLE 4

### Effects of Evaporation on an Automated Biological Process

Evaporation of liquids is impacted by several physical and chemical parameters. Biological liquids are impacted by these same parameters, which can go on to affect the performance of an automated biological process.

Antha^{®} was used as in previous Examples, in order create a workflow for an experimental design that was able to identify an evaporation phenomenon occurring during liquid handling class optimisation for a Tecan Evo^{®} device, such as that described in Example 1. It was noted that optimisation could be further improved by consideration of process factors as opposed to focusing upon improvement of CV for liquid handing parameters only. The impact of the liquid handling policies was measured on the biological outcome of the process, in this case, the biological outcome was set as the cycle threshold (Ct) value of a qPCR run. The following multiple process factors were optimised in tandem.
- Temperature (room temperature vs ice)
- Incubation time (zero vs 30 minutes)
- Whether the container/plate was sealed (sealed (S) vs not sealed (NS))

Using the process of the invention to leverage the best liquid handling policies and observe them in combination with range of process parameters the steps of plate sealing and sample chilling were identified as pivotal in affecting biological outcome of the process. In contrast, if only the CV for liquid handling accuracy was used as a measure for optimisation alone, without consideration of the impact on the biology (i.e. without considering Ct values), it would not have been possible to ensure the biological robustness of the protocol.

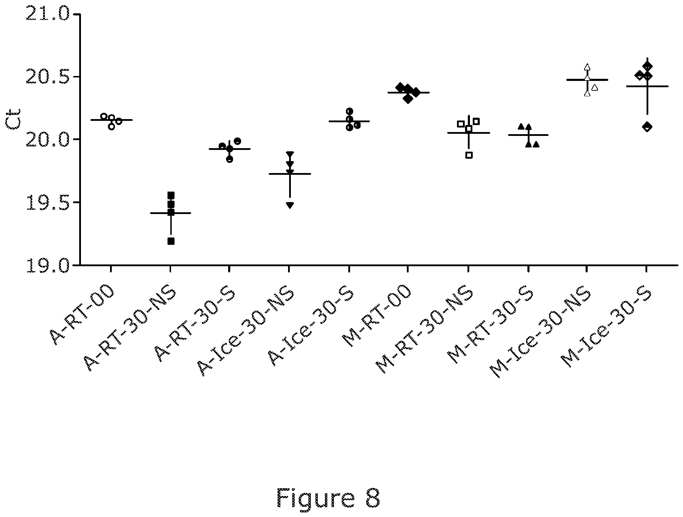

Figure 8 Shows the results of the various combinations of process factors considered with a lower Ct being a better outcome. The automation was compared to manual handling (M) which unexpectedly demonstrated significantly poorer outcome for all results irrespective of factor optimisation.

Although particular embodiments of the invention have been disclosed herein in detail, this has been done by way of example and for the purposes of illustration only. The aforementioned embodiments are not intended to be limiting with respect to the scope of the appended claims, which follow. The choice of reagents, the protocol of interest, or type of devices used is believed to be a routine matter for the person of skill in the art with knowledge of the presently described embodiments.

## Claims

1. A computer implemented method for improving the process performance of an automated laboratory protocol, at least a part of which protocol requires at least one liquid handling step that is performed by using a liquid handling apparatus under the operative control of a processor, the method comprising:
i. defining at least one liquid handling step in the protocol that comprises a liquid handling operation;
ii. selecting at least a first and at least a second process factors for the at least one liquid handling step in the protocol, wherein the first and second process factors are different and are selected from the group consisting of: an equipment process factor; a liquid process factor; and a protocol process factor;
iii. assigning parameter variations for the first and second process factors selected for investigation;
iv. performing a plurality of test runs on the liquid handling apparatus to determine the effects of the parameter variations for the first and second process factors;
v. analysing the results of the plurality of test runs to identify the one or more test runs that show optimal process performance; and
vi. amending the automated laboratory protocol to improve process performance of the liquid handling apparatus.

2. The method of claim 1, wherein the equipment process factor is selected from the group consisting of: an automation factor; a pipetting factor; a pipette tip factor; a dispensing factor; and a containment factor.

3. The method of claim 2, wherein the automation factor is selected from the group consisting of: make and/or model of liquid handling apparatus; configuration of liquid handling apparatus; and setup of liquid handling apparatus; or
wherein the pipetting factor is selected from the group consisting of: aspirate speed; dispense speed; mix speed; waiting time; excess aspirated volume; excess dispensed volume; aspirate/dispense position relative to the container/liquid being addressed; tip movement speed; blowout choice; pre-wet of tip; number of tip uses; pre-mix of liquid source; post-mix of liquid destination; liquid source volume; and liquid source depth; or
wherein the pipette tip factor is selected from the group consisting of: pipette tip size; pipette tip capacity; presence or absence of filter; fixed or removable tip; conductive properties of tip material; selection of tip material; bore size; tip make; tip coating; tip geometry; and batch number; or
wherein the dispensing factor is selected from the group consisting of: amount of liquid in destination well; type of liquid in destination well; force of dispense; choice of pulsed dispense or continuous dispense; duration of dispense; and selection of acoustic or physical dispense; or
wherein the containment factor is selected from the group consisting of: containment properties; source container geometry; destination container geometry; source container material; destination container material; and destination container capacity.

4. The method of any one of claims 1 to 3, wherein the liquid process factor is selected from the group consisting of: a physical liquid factor; a stability factor; a chemical liquid factor; and a biological liquid factor.

5. The method of claim 4, wherein the physical liquid factor is selected from the group consisting of: viscosity; surface tension; charge; hydrophobicity; volatility; rheology; liquid temperature; and sheer sensitivity; or
wherein the stability factor is selected from the group consisting of: temperature lability; light lability; chemical stability; and biochemical stability; or
wherein the chemical liquid factor is selected from the group consisting of: pH; ion content; total organic carbon content; solute identity; and radioisotope content; or
wherein the biological liquid factor is selected from the group consisting of: cell survival; cell density; cell stability; cell health; biomolecular composition; biomolecular concentration; and biopolymer integrity.

6. The method of any one of claims 1 to 5, wherein the protocol process factor is selected from the group consisting of: an environmental factor; an agitation factor; and a timing factor.

7. The method of claim 6, wherein the environmental factor is selected from the group consisting of: environmental temperature; environmental humidity; barometric pressure; atmospheric circulation; atmospheric flow rate; electromagnetic radiation exposure levels; and type of electromagnetic radiation; or
wherein the agitation factor is selected from: presence or absence of agitation; type of agitation; and amount of agitation; or
wherein the timing factor is selected from the group consisting of: timing of protocol; presence or absence of time delay between process steps; length of time delay between process steps; and number of time delays between process steps.

8. The method of any one of claims 1 to 7, wherein at least a third or more process factors are selected for the one liquid handling step; and/or wherein more than one liquid handling step is defined and at least a first and at least a second process factors are selected for each liquid handling step.

9. The method of any one of claims 1 to 8, wherein the processor is comprised within a device that comprises a graphical user interface; optionally wherein the processor is comprised within a device selected from one of the group comprising: a laptop; a mobile device; a tablet and a personal computer.

10. The method of any one of claims 1 to 9, wherein the processor is located remotely from the liquid handling apparatus.

11. The method of any one of claims 1 to 10, wherein analysing the results of the plurality of test runs is carried out using an optimisation algorithm.

12. The method of claim 11, wherein the optimisation algorithm comprises a response surface design; or
wherein the optimisation algorithm comprises Bayesian experimental design; or
wherein the optimisation algorithm comprises a Monte Carlo method; or
wherein the optimisation algorithm comprises a Design of Experiments factorial or fractional factorial approach selected from the group consisting of: a Box-Behnken design; a Plackett-Burmann design; a Taguchi method; and a definitive screening design; or
wherein the optimisation algorithm comprises a genetic algorithm/evolutionary computational method; or
wherein the optimisation algorithm comprises a linear programming/simplex method; or
wherein the optimisation algorithm comprises a constraint satisfaction method.

13. The method of any one of claims 1 to 12, wherein the optimisation algorithm comprises a machine learning approach.

14. A device for executing a laboratory protocol, the device comprising at least one automated liquid handling system, and at least one processor for controlling an operation of the liquid handling system, the processor being configured to perform a process optimisation procedure in order to improve process performance of the protocol, wherein the process optimisation procedure comprises a method as set out in any one of claims 1 to 13.

15. The device of claim 14, wherein the device comprises a laboratory pipetting robot; and/or wherein the device comprises an automated liquid handling system selected from the group consisting of: a dispenser; an acoustic liquid handler; and an optofluidic liquid handler.

## Patentansprüche

1. Ein computerimplementiertes Verfahren zum Verbessern der Prozessleistung eines automatisierten Laborprotokolls, wobei mindestens ein Teil des Protokolls mindestens einen Flüssigkeitshandhabungsschritt erfordert, der unter Verwendung eines Flüssigkeitshandhabungsapparats unter der operativen Steuerung eines Prozessors durchgeführt wird, wobei das Verfahren Folgendes umfasst:
i. Definieren von mindestens einem Flüssigkeitshandhabungsschritt in dem Protokoll, das eine Flüssigkeitshandhabungsoperation umfasst;
ii. Auswählen von mindestens einem ersten und mindestens einem zweiten Prozessfaktor für den mindestens einen Flüssigkeitshandhabungsschritt in dem Protokoll, wobei der erste und zweite Prozessfaktor unterschiedlich sind und aus der Gruppe ausgewählt werden, die aus Folgendem besteht: einem Ausrüstungsprozessfaktor; einem Flüssigkeitsprozessfaktor und einem Protokollprozessfaktor;
iii. Zuweisen von Parametervariationen für den ersten und zweiten Prozessfaktor, die zur Untersuchung ausgewählt werden;
iv. Durchführen einer Vielzahl von Testläufen an dem Flüssigkeitshandhabungsapparat, um die Auswirkungen der Parametervariationen für den ersten und zweiten Prozessfaktor zu bestimmen;
v. Analysieren der Resultate der Vielzahl von Testläufen, um den einen oder die mehreren Testläufe zu identifizieren, die eine optimale Prozessleistung zeigen; und
vi. Abändern des automatisierten Laborprotokolls, um die Prozessleistung des Flüssigkeitshandhabungsapparats zu verbessern.

2. Verfahren nach Anspruch 1, wobei der Ausrüstungsprozessfaktor aus der Gruppe ausgewählt wird, die aus Folgendem besteht: einem Automatisierungsfaktor; einem Pipettierungsfaktor; einem Pipettenspitzenfaktor; einem Spendefaktor und einem Einhausungsfaktor.

3. Verfahren nach Anspruch 2, wobei der Automatisierungsfaktor aus der Gruppe ausgewählt wird, die aus Folgendem besteht: Fabrikat und/oder Modell von Flüssigkeitshandhabungsapparat; Konfiguration von Flüssigkeitshandhabungsapparat; und Einstellung von Flüssigkeitshandhabungsapparat; oder
wobei der Pipettierungsfaktor aus der Gruppe ausgewählt wird, die aus Folgendem besteht: Aspirierungsgeschwindigkeit; Spendegeschwindigkeit; Mischgeschwindigkeit; Wartezeit; überschüssiges aspiriertes Volumen; überschüssiges gespendetes Volumen; Aspirierungs-/Spendeposition relativ zu dem Container/der Flüssigkeit, die adressiert werden; Spitzenbewegungsgeschwindigkeit; Ausblaswahl; Vorbefeuchtung von Spitze; Anzahl von Spitzenverwendungen; Vormischung von Flüssigkeitsquelle; Nachmischung von Flüssigkeitsziel; Flüssigkeitsquellenvolumen; und Flüssigkeitsquellentiefe; oder
wobei der Pipettierungsfaktor aus der Gruppe ausgewählt wird, die aus Folgendem besteht: Pipettenspitzengröße; Pipettenspitzenkapazität; Vorhandensein oder Abwesenheit von Filter; fixierte oder entfernbare Spitze; Leitfähigkeitseigenschaften des Spitzenmaterials; Auswahl des Spitzenmaterials; Bohrungsgröße; Spitzenfabrikat; Spitzenbeschichtung; Spitzengeometrie und Chargennummer; oder
wobei der Spendefaktor aus der Gruppe ausgewählt wird, die aus Folgendem besteht: Betrag der Flüssigkeit in Ziel-Well; Typ der Flüssigkeit in Ziel-Well; Kraft des Spendens; Wahl von pulsiertem Spenden oder kontinuierlichem Spenden; Dauer des Spendens; und Auswahl von akustischem oder physikalischem Spenden; oder wobei der Einhausungsfaktor aus der Gruppe ausgewählt wird, die aus Folgendem besteht: Einhausungseigenschaften; Quellencontainergeometrie; Zielcontainergeometrie; Quellencontainermaterial; Zielcontainermaterial; und Zielcontainerkapazität.

4. Verfahren nach einem der Ansprüche 1 bis 3, wobei der Flüssigkeitsprozessfaktor aus der Gruppe ausgewählt wird, die aus Folgendem besteht: einem physikalischen Flüssigkeitsfaktor; einem Stabilitätsfaktor; einem chemischen Flüssigkeitsfaktor; und einem biologischen Flüssigkeitsfaktor.

5. Verfahren nach Anspruch 4, wobei der physikalische Flüssigkeitsfaktor aus der Gruppe ausgewählt wird, die aus Folgenden besteht: Viskosität; Oberflächenspannung; Ladung; Hydrophobie; Volatilität; Rheologie; Flüssigkeitstemperatur; und Scherempfindlichkeit; oder
wobei der Stabilitätsfaktor aus der Gruppe ausgewählt wird, die aus Folgendem besteht: Temperaturlabilität; Lichtlabilität; chemische Stabilität; und biochemische Stabilität; oder
wobei der chemische Flüssigkeitsfaktor aus der Gruppe ausgewählt wird, die aus Folgendem besteht: pH; Ionengehalt; gesamter organischer Kohlenstoffgehalt; Gelöstesidentität; und Radioisotopengehalt; oder
wobei der biologische Flüssigkeitsfaktor aus der Gruppe ausgewählt wird, die aus Folgendem besteht: Zellüberleben; Zelldichte; Zellstabilität; Zellgesundheit; biomolekulare Zusammensetzung; biomolekulare Konzentration; und biopolymere Integrität.

6. Verfahren nach einem der Ansprüche 1 bis 5, wobei der Protokollprozessfaktor aus der Gruppe ausgewählt wird, die aus Folgendem besteht: einem Umgebungsfaktor; einem Agitationsfaktor; und einem Zeitfaktor.

7. Verfahren nach Anspruch 6, wobei der Umgebungsfaktor aus der Gruppe ausgewählt wird, die aus Folgendem besteht: Umgebungstemperatur; Umgebungsfeuchtigkeit; barometrischer Druck; atmosphärische Zirkulation; atmosphärische Flussrate; elektromagnetische Strahlungsexpositionsniveaus; und Typ der elektromagnetischen Strahlung; oder
wobei der Agitationsfaktor aus Folgendem ausgewählt wird: Vorhandensein oder Abwesenheit von Agitation; Typ der Agitation; und Betrag der Agitation; oder
wobei der Zeitfaktor aus der Gruppe ausgewählt wird, die aus Folgendem besteht: Zeitpunkt des Protokolls; Vorhandensein oder Abwesenheit von Zeitverzögerung zwischen Prozessschritten; Länge von Zeitverzögerung zwischen Prozessschritten; und Anzahl von Zeitverzögerung zwischen Prozessschritten.

8. Verfahren nach einem der Ansprüche 1 bis 7, wobei mindestens ein dritter oder mehr Prozessfaktoren für den einen Flüssigkeitshandhabungsschritt ausgewählt werden; und/oder wobei mehr als ein Flüssigkeitshandhabungsschritt definiert wird und mindestens ein erster und mindestens ein zweiter Prozessfaktor für jeden Flüssigkeitshandhabungsschritt ausgewählt werden.

9. Verfahren nach einem der Ansprüche 1 bis 8, wobei der Prozessor innerhalb einer Vorrichtung umfasst ist, die eine grafische Benutzerschnittstelle umfasst; wobei optional der Prozessor innerhalb einer Vorrichtung umfasst ist, die aus einem der Gruppe ausgewählt wird, die Folgendes umfasst: einen Laptop; eine mobile Vorrichtung; ein Tablet und einen Personalcomputer.

10. Verfahren nach einem der Ansprüche 1 bis 9, wobei sich der Prozessor entfernt von dem Flüssigkeitshandhabungsapparat befindet.

11. Verfahren nach einem der Ansprüche 1 bis 10, wobei das Analysieren der Resultate der Vielzahl von Testläufen unter Verwendung eines Optimierungsalgorithmus ausgeführt wird.

12. Verfahren nach Anspruch 11, wobei der Optimierungsalgorithmus ein Response-Surface-Design umfasst; oder
wobei der Optimierungsalgorithmus ein bayessches experimentelles Design umfasst;
oder wobei der Optimierungsalgorithmus ein Monte-Carlo-Verfahren umfasst; oder
wobei der Optimierungsalgorithmus einen faktoriellen oder fraktionellen faktoriellen Design-of-Experiments-Ansatz umfasst, der aus der Gruppe ausgewählt wird, die aus Folgendem besteht: einem Box-Behnken-Design; einem Plackett-Burmann-Design; einem Taguchi-Verfahren; und einem Definitive-Screening-Design; oder
wobei der Optimierungsalgorithmus ein genetisches Algorithmus-/evolutionäres rechnergestütztes Verfahren umfasst; oder
wobei der Optimierungsalgorithmus ein lineares Programmierungs-/Simplexverfahren umfasst; oder
wobei der Optimierungsalgorithmus ein Constraint-Satisfaction-Verfahren umfasst.

13. Verfahren nach einem der Ansprüche 1 bis 12, wobei der Optimierungsalgorithmus einen Maschinenlernansatz umfasst.

14. Eine Vorrichtung zum Ausführen eines Laborprotokolls, wobei die Vorrichtung mindestens ein automatisiertes Flüssigkeitshandhabungssystem und mindestens einen Prozessor zum Steuern einer Operation des Flüssigkeitshandhabungssystem umfasst, wobei der Prozessor dazu konfiguriert ist, einen Prozessoptimierungsvorgang durchzuführen, um die Prozessleistung des Protokolls zu verbessern, wobei der Prozessoptimierungsvorgang ein Verfahren gemäß einem der Ansprüche 1 bis 13 umfasst.

15. Vorrichtung nach Anspruch 14, wobei die Vorrichtung einen Laborpipettierungsroboter umfasst; und/oder wobei die Vorrichtung ein automatisiertes Flüssigkeitshandhabungssystem umfasst, das aus der Gruppe ausgewählt wird, die aus Folgendem besteht: einem Spender; einem akustischen Flüssigkeitshandhaber; und einem optofluidischen Flüssigkeitshandhaber.

## Revendications

1. Un procédé mis en oeuvre par ordinateur d'amélioration des performances de traitement d'un protocole de laboratoire automatisé, au moins une partie dudit protocole exigeant au moins une étape de manipulation de liquide qui est exécutée au moyen d'un appareil de manipulation de liquide sous la commande fonctionnelle d'un processeur, le procédé comprenant :
i. la définition d'au moins une étape de manipulation de liquide dans le protocole qui comprend une opération de manipulation de liquide,
ii. la sélection d'au moins un premier et d'au moins un deuxième facteur de traitement pour la au moins une étape de manipulation de liquide dans le protocole, où les premier et deuxième facteurs de traitement sont différents et sont sélectionnés dans le groupe se composant de : un facteur de traitement d'équipement, un facteur de traitement de liquide et un facteur de traitement de protocole,
iii. l'affectation de variations de paramètre pour les premier et deuxième facteurs de traitement sélectionnés à des fins d'investigation,
iv. l'exécution d'une pluralité de tests sur l'appareil de manipulation de liquide de façon à déterminer les effets des variations de paramètre pour les premier et deuxième facteurs de traitement,
v. l'analyse des résultats de la pluralité de tests de façon à identifier les un ou plusieurs tests qui montrent des performances de traitement optimales, et
vi. la modification du protocole de laboratoire automatisé de façon à améliorer les performances de traitement de l'appareil de manipulation de liquide.

2. Le procédé selon la Revendication 1, où le facteur de traitement d'équipement est sélectionné dans le groupe se composant de : un facteur d'automatisation, un facteur de pipetage, un facteur de pointe de pipette, un facteur de délivrance et un facteur de confinement.

3. Le procédé selon la Revendication 2, où le facteur d'automatisation est sélectionné dans le groupe se composant de : une marque et/ou un modèle de l'appareil de manipulation de liquide, une configuration de l'appareil de manipulation de liquide et une mise en place de l'appareil de manipulation de liquide, ou
où le facteur de pipetage est sélectionné dans le groupe se composant de : une vitesse d'aspiration, une vitesse de délivrance, une vitesse de mélange, un temps d'attente, un volume aspiré en excès, un volume délivré en excès, une position d'aspiration/délivrance par rapport au conteneur/liquide concerné, une vitesse de déplacement de la pointe, un choix de soufflage, un pré-mouillage de la pointe, un nombre d'utilisations de pointe, un prémélange de source de liquide, un post-mélange de destination de liquide, un volume de source de liquide et une profondeur de source de liquide, ou
où le facteur de pointe de pipette est sélectionné dans le groupe se composant de : une taille de pointe de pipette, une capacité de pointe de pipette, une présence ou une absence de filtre, une pointe fixe ou amovible, des propriétés de conductivité du matériau de la pointe, une sélection du matériau de la pointe, une taille de l'alésage, une marque de la pointe, un revêtement de la pointe, une géométrie de la pointe et un numéro de lot, ou
où le facteur de délivrance est sélectionné dans le groupe se composant de : une quantité de liquide dans le puits de destination, un type de liquide dans le puits de destination, une force de délivrance, un choix entre délivrance pulsée ou délivrance continue, une durée de délivrance et une sélection entre délivrance physique ou acoustique, ou
où le facteur de confinement est sélectionné dans le groupe se composant de : propriétés de confinement, une géométrie de conteneur source, une géométrie de conteneur de destination, un matériau de conteneur source, un matériau de conteneur de destination et une capacité de conteneur de destination.

4. Le procédé selon l'une quelconque des Revendications 1 à 3, où le facteur de traitement de liquide est sélectionné dans le groupe se composant de : un facteur de liquide physique, un facteur de stabilité, un facteur de liquide chimique et un facteur de liquide biologique.

5. Le procédé selon la Revendication 4, où le facteur de liquide physique est sélectionné dans le groupe se composant de : une viscosité, une tension de surface, une charge, une hydrophobicité, une volatilité, une rhéologie, une température de liquide et une sensibilité au cisaillement, ou
où le facteur de stabilité est sélectionné dans le groupe se composant de : une labilité de température, une labilité de la lumière, une stabilité chimique et une stabilité biochimique, ou
où le facteur de liquide chimique est sélectionné dans le groupe se composant de : un pH, une teneur en ions, une teneur en carbone organique totale, une identité de soluté et une teneur en radioisotopes, ou
où le facteur de liquide biologique est sélectionné dans le groupe se composant de : une survie cellulaire, une densité cellulaire, une stabilité cellulaire, une santé cellulaire, une composition biomoléculaire, une concentration biomoléculaire et une intégrité biopolymérique.

6. Le procédé selon l'une quelconque des Revendications 1 à 5, où le facteur de traitement de protocole est sélectionné dans le groupe se composant de : un facteur environnemental, un facteur d'agitation et un facteur temporel.

7. Le procédé selon la Revendication 6, où le facteur environnemental est sélectionné dans le groupe se composant de : une température environnementale, une humidité environnementale, une pression barométrique, une circulation atmosphérique, un débit de flux atmosphérique, des niveaux d'exposition au rayonnement électromagnétique et un type de rayonnement électromagnétique, ou
où le facteur d'agitation est sélectionné parmi : une présence ou une absence d'agitation, un type d'agitation et une quantité d'agitation, ou
où le facteur temporel est sélectionné dans le groupe se composant de : une échéance du protocole, une présence ou une absence d'un délai entre les étapes de traitement, une longueur du délai entre les étapes de traitement et un nombre de délais entre les étapes de traitement.

8. Le procédé selon l'une quelconque des Revendications 1 à 7, où au moins un troisième ou plus facteurs de traitement sont sélectionnés pour ladite étape de manipulation de liquide, et/ou où plus d'une étape de manipulation de liquide est définie et au moins un premier et au moins un deuxième facteurs de traitement sont sélectionnés pour chaque étape de manipulation de liquide.

9. Le procédé selon l'une quelconque des Revendications 1 à 8, où le processeur est inclus à l'intérieur d'un dispositif qui comprend une interface utilisateur graphique, éventuellement où le processeur est inclus à l'intérieur d'un dispositif sélectionné parmi des dispositifs d'un groupe comprenant : un ordinateur portatif, un dispositif mobile, une tablette et un ordinateur personnel.

10. Le procédé selon l'une quelconque des Revendications 1 à 9, où le processeur est installé à distance de l'appareil de manipulation de liquide.

11. Le procédé selon l'une quelconque des Revendications 1 à 10, où l'analyse des résultats de la pluralité de tests est exécutée au moyen d'un algorithme d'optimisation.

12. Le procédé selon la Revendication 11, où l'algorithme d'optimisation comprend un modèle de surface de réponse, ou
où l'algorithme d'optimisation comprend un modèle expérimental bayésien, ou
où l'algorithme d'optimisation comprend une méthode de Monte Carlo, ou
où l'algorithme d'optimisation comprend un factoriel de plan d'expériences ou une approche de factoriel fractionné sélectionnée dans le groupe se composant de : un plan Box-Behnken, un plan Plackett-Burmann, une méthode Taguchi et un plan de criblage définitif, ou
où l'algorithme d'optimisation comprend un procédé computationnel d'algorithme génétique/évolutionnaire, ou
où l'algorithme d'optimisation comprend un procédé de programmation linéaire/simplex, ou
où l'algorithme d'optimisation comprend un procédé de satisfaction de contrainte.

13. Le procédé selon l'une quelconque des Revendications 1 à 12, où l'algorithme d'optimisation comprend une approche d'apprentissage par ordinateur.

14. Un dispositif d'exécution d'un protocole de laboratoire, le dispositif comprenant au moins un système de manipulation de liquide automatisé, et au moins un processeur destiné à la commande d'un fonctionnement du système de manipulation de liquide, le processeur étant configuré de façon à exécuter une procédure d'optimisation de traitement afin d'améliorer des performances de traitement du protocole, où la procédure d'optimisation de traitement comprend un procédé décrit dans l'une quelconque des Revendications 1 à 13.

15. Le dispositif selon la Revendication 14, où le dispositif comprend un robot de pipetage de laboratoire, et/ou où le dispositif comprend un système de manipulation de liquide automatisé sélectionné dans le groupe se composant de : un dispositif de délivrance, un dispositif de manipulation de liquide acoustique et un dispositif de manipulation de liquide optofluidique.
